# EUROPÄISCHE PATENTSCHRIFT

(11) **EP 3 776 098 B1**
(45) Veröffentlichungstag und Bekanntmachung des Hinweises auf die Patenterteilung: **08.03.2023**
(21) Anmeldenummer: 19712511.5
(22) Anmeldetag: 18.03.2019
(51) Int. Cl.: G05B 9/02, G05B 19/406

(54) **SYSTEM UND VERFAHREN ZUM BETREIBEN EINES SYSTEMS**
SYSTEM AND METHOD FOR OPERATING A SYSTEM
SYSTÈME ET PROCÉDÉ DE FONCTIONNEMENT D'UN SYSTÈME

(30) Priorität: 13.04.2018 DE 102018003023; 23.04.2018 DE 102018003296
(43) Veröffentlichungstag der Anmeldung: 17.02.2021
(73) Patentinhaber: SEW-Eurodrive GmbH & Co, 76646 Bruchsal (DE)
(72) Erfinder: KRAH, Jens onno, 50789 Köln (DE)
(86) Internationale Anmeldenummer: PCT/EP2019/025071
(87) Internationale Veröffentlichungsnummer: WO 2019/197057

(56) Entgegenhaltungen:
- EP-B1- 1 866 712
- DE-A1- 19 920 299

## Beschreibung

Die Erfindung betrifft ein System und ein Verfahren zum Betreiben eines Systems.

Es ist allgemein bekannt, dass bei einem Not-Halte-Schalter mit zwei voneinander unabhängigen Kontakten bei Betätigung des Schalters beide Kontakte gleichzeitig betätigt werden.

Aus der WO2004059812A1 ist eine Motorsteuerung mit einer Steuereinrichtung und einer Sicherheitsvorrichtung zum sicheren Abschalten eines Elektromotors bekannt.

**Aus der** WO 2017 / 064 565A1 **ist ein System mit über einen Datenbus verbundenen Elektrogeräten bekannt.**

**Aus der** US 2017 / 0 324 515 A1 **ist ein Flugsicherheitssystem bekannt.**

**Aus der** EP 1 866 712 B1 **ist als nächstliegender Stand der Technik ein Verfahren zur sicheren verwechslungsfreien und ausschließlichen Zuordnung der Befehlsgewalt einer Bedienperson zu einer steuerbaren technischen Einrichtung bekannt.**

Der Erfindung liegt daher die Aufgabe zugrunde, ein Antriebssystem mit hoher Sicherheit weiterzubilden, wobei möglichst wenig zusätzliche Teile verwendet werden sollen.

Erfindungsgemäß wird die Aufgabe bei dem System nach den in Anspruch 1 und bei dem Verfahren nach den in Anspruch 11 angegebenen Merkmalen gelöst.

Somit verbindet der Datenbus also zwei Elektrogeräte und zumindest eine Vorrichtung, in welcher ein zweikanaliger Not-Halte-Schalter vorsehbar ist oder mit welcher ein zweikanaliger Not-Halte-Schalter verbindbar ist. Der Datenbus selbst ist jedoch nur einkanalig ausgeführt.

Vorzugsweise wird jeder Kanal des Schalters sicherheitsgerichtet über den Datenbus übertragen. Dabei wird der erste Kanal an das erste Elektrogerät, insbesondere an die erste Logikeinheit übermittelt und der andere Kanal an die zweite Logikeinheit des zweiten Elektrogeräts. Die Übermittlung der Informationspakete auf dem Datenbus ist dabei ebenfalls sicherheitsgerichtet ausgeführt. Hierzu wird für jeden Kanal von einer ersten Signalelektronik des Not-Halte-Schalters zur Erzeugung der Daten eines jeweiligen Informationspakets verwendet und von einer zweiten Signalelektronik das CRC des Informationspakets erzeugt. Beim Empfangen des Informationspakets im ersten Elektrogerät wird wiederum sicherheitsgerichtet geprüft, ob das CRC zu den Daten des Informationspakets in Übereinstimmung ist. Bei Abweichung wird ein Abschaltesignal erzeugt. Zur Erhöhung der Sicherheit ist auch ein redundantes übertragen der Informationspakete ausführbar, wobei die beiden Signalelektroniken des Not-Halte-Schalters die CRC kreuzweise bestimmen und beim Empfänger entsprechend kreuzweise kontrolliert wird.

In jedem Fall ist also die Datenübertragung sicherheitsgerichtet ausgeführt.

Von Vorteil ist dabei, dass das Elektrogerät zweikanalig abschaltbar ist und somit eine höhere Sicherheitskategorie erfüllt, obwohl nur ein kostengünstiger einkanaliger Datenbus verwendet wird. Denn die Betätigung der beiden Kanäle wird durch die Logikeinheiten ausgeführt. Diese Logikeinheiten, insbesondere FPGA, sind bei Elektrogeräten üblich und meist auch ohne Sicherheitsfunktion vorhanden. Erfindungsgemäß wird nun zur Herstellung der höheren Sicherheit eine Rechenkapazität der zweiten Logikeinheit genutzt. Die Elektronik zweier Elektrogeräte überwacht sich also gegenseitig. Eine übergeordnete Sicherheitssteuerung zusätzlich zur zentralen Steuerung ist also nicht notwendig.

Allerdings sind die Logikeinheiten vorzugsweise als Busteilnehmer ausgeführt, wie auch die Rechnereinheiten. Dies bedeutet, dass jede Logikeinheit eine Adresse und jede Rechnereinheit ebenfalls eine Adresse aufweist. Alternativ ist aber auch jedem Elektrogerät nur eine einzige Busadresse zuordenbar und die Datenströme dann über zwei Ports einer Busteilnehmereinheit leitbar.

In jedem Fall ist also das sicherheitsgerichtete Abschalten eines Elektrogeräts nicht nur von der ersten Logikeinheit, die auf dem Elektrogerät selbst angeordnet ist, sondern auch von einer zweiten Logikeinheit, welche auf dem anderen Elektrogerät angeordnet ist, möglich.

Bei einer vorteilhaften Ausgestaltung ist ein zweites Schaltungsteil des zweiten Elektrogeräts redundant abschaltbar ausgeführt ist, insbesondere redundant von der zweiten Logikeinheit und von der ersten Logikeinheit abschaltbar ausgeführt ist. Von Vorteil ist dabei, dass eine hohe Sicherheitskategorie erreichbar ist. Denn das zweite Elektrogerät ist entsprechend dem ersten Elektrogerät aufgebaut. Wesentlicher Unterschied der beiden Elektrogeräte ist allerdings, dass die Software der ersten Logikeinheit diversitär zu der Software der zweiten Logikeinheit ist.

Zur vereinfachten Herstellung werden zwei Softwarepakete in jedem der Elektrogeräte vorgesehen. Beim ersten Elektrogerät wird dann das erste der Softwarepakete für die erste Logikeinheit verwendet und das andere, also zweite, für die erste Rechnereinheit. Im zweiten Elektrogerät wird umgekehrt das zweite der Softwarepakete für die zweite Logikeinheit verwendet und das erste für die zweite Rechnereinheit.

Bei einer vorteilhaften Ausgestaltung ist von der ersten Logikeinheit eine erste Abschaltsignalspannung erzeugbar
und von der ersten Rechnereinheit ist ein von der zweiten Logikeinheit erzeugter Abschaltbefehl empfangbar und davon abhängig eine zweite Abschaltsignalspannung erzeugbar,
wobei beide Abschaltsignalspannungen zum ersten Schaltungsteil, insbesondere über voneinander separate Leiterbahnen einer Leiterplatte des ersten Elektrogeräts geführt werden zur redundanten Abschaltung des ersten Schaltungsteils. Von Vorteil ist dabei, dass der zweite Kanal eine wie auch die erste Logikeinheit ebenso sicherheitsgerichtete Rechnereinheit verwendet, wobei allerdings die Software zueinander diversitär gewählt ist. Erste Logikeinheit und erste Rechnereinheit überwachen sich gegenseitig und sind vorzugswiese beide in Lockstep-Technik ausgeführt.

Bei einer vorteilhaften Ausgestaltung ist von der zweiten Logikeinheit eine dritte Abschaltsignalspannung erzeugbar
und von der zweiten Rechnereinheit ist ein von der ersten Logikeinheit erzeugter Abschaltbefehl empfangbar und davon abhängig eine vierte Abschaltsignalspannung erzeugbar,
wobei die dritte und vierte Abschaltsignalspannung zum zweiten Schaltungsteil, insbesondere über voneinander separate Leiterbahnen einer Leiterplatte des zweiten Elektrogeräts geführt werden zur redundanten Abschaltung des zweiten Schaltungsteils. Von Vorteil ist dabei, dass die Sicherheit unter Verwendung eines baugleichen zweiten Elektrogeräts herstellbar ist. Bei Ausführung der Elektrogeräte als Umrichter sind also die beim Umrichter vorhandenen Rechnerkapazitäten nutzbar zur gegenseitigen Überwachung und Bereitstellung zweikanaliger Sicherheit.

Bei einer vorteilhaften Ausgestaltung ist die erste Logikeinheit, die zweite Logikeinheit, die erste Rechnereinheit und die zweite Rechnereinheit jeweils als Lockstep-Einheit, insbesondere FPGA mit Lockstep-Mikrocontroller, ausgeführt ist,
insbesondere wobei Ergebnisse der ersten und zweiten Logikeinheit zyklisch wiederkehrend miteinander ausgetauscht und verglichen werden, wobei abhängig vom Ergebnis des Vergleichs, insbesondere bei Abweichung, die erste Logikeinheit eine Signalspannung zum Abschalten der Schalteinheit erzeugt und die erste Rechnereinheit ebenfalls eine Signalspannung zum Abschalten der Schalteinheit erzeugt,
insbesondere wobei Ergebnisse der ersten Logikeinheit und ersten Rechnereinheit zyklisch wiederkehrend miteinander ausgetauscht und verglichen werden, wobei abhängig vom Ergebnis des Vergleichs, insbesondere bei Abweichung, die erste Logikeinheit eine Signalspannung zum Abschalten der Schalteinheit erzeugt und die erste Rechnereinheit ebenfalls eine Signalspannung zum Abschalten der Schalteinheit erzeugt,
insbesondere wobei Ergebnisse der zweiten Logikeinheit und zweiten Rechnereinheit zyklisch wiederkehrend miteinander ausgetauscht und verglichen werden, wobei abhängig vom Ergebnis des Vergleichs, insbesondere bei Abweichung, die erste Logikeinheit eine Signalspannung zum Abschalten der Schalteinheit erzeugt und die erste Rechnereinheit ebenfalls eine Signalspannung zum Abschalten der Schalteinheit erzeugt. Von Vorteil ist dabei, dass eine hohe Sicherheitskategorie erreichbar ist. Dabei ist nur ein geringer Herstellaufwand notwendig, da in jedem Elektrogerät zwei unterschiedliche Softwarepakete vorhanden sind, welche der jeweiligen Logikeinheit und Rechnereinheit zugeordnet werden. Die Hardware der beiden Einheiten ist derart ausgeführt, dass jedes der beiden Softwarepakete ablauffähig ist auf der jeweiligen Hardware jeder der Einheiten. Somit arbeite innerhalb des Elektrogeräts zwei diversitäre Einheiten in gegenseitiger Überwachung. Aber auch die sich gegenseitig überwachenden Einheiten der beiden Elektrogeräte, also die erste und die zweite Logikeinheit, sind diversitär zueinander ausgeführt. Auf diese Weise ist eine hohe Sicherheitskategorie erreichbar.

Bei einer vorteilhaften Ausgestaltung ist die jeweilige Logikeinheit aus mehreren Subeinheiten zusammengesetzt, welche jeweils mittels einer jeweiligen Kommunikationsverbindung zum Datenaustausch miteinander verbunden sind. Von Vorteil ist dabei, dass eine noch höhere Sicherheitskategorie erreichbar ist.

Bei einer vorteilhaften Ausgestaltung ist in jedem der Elektrogeräte jeweils eine weitere Rechnereinheit, insbesondere aufweisend einen Mikrocontroller, vorgesehen zur Erzeugung pulsweitenmodulierter Ansteuersignale für die Schalteinheit des jeweiligen Elektrogeräts, wobei die weitere Rechnereinheit mit einem Winkelsensor verbunden ist, insbesondere zur Zuleitung der Sensorsignale des Winkelsensors an die weitere Rechnereinheit. Von Vorteil ist dabei, dass die nicht sicherheitsgerichteten Teile der Elektrogeräte in einfacher, insbesondere nicht sicherheitsgerichteter Ausführung betreibbar sind, obwohl das gesamte System von Elektrogeräten eine hohe Sicherheitskategorie erfüllt.

Bei einer vorteilhaften Ausgestaltung sind die erste Logikeinheit und die erste Rechnereinheit zueinander diversitär ausgeführt,
insbesondere wobei die erste Logikeinheit eine erste Software aufweist und die erste Rechnereinheit eine von der ersten Software unterschiedliche zweite Software aufweist,
und die zweite Logikeinheit und die zweite Rechnereinheit sind zueinander diversitär ausgeführt,
insbesondere wobei die zweite Logikeinheit die zweite Software aufweist und die zweite Rechnereinheit die erste Software aufweist. Von Vorteil ist dabei, dass eine hohe Sicherheitskategorie erreichbar ist. Die sicherheitsgerichtete Ausführung des gesamten Systems ist somit kostengünstig und ohne besonderen Zusatzaufwand ausführbar.

Bei einer vorteilhaften Ausgestaltung sind erstes und zweites Elektrogerät voneinander beabstandet. Von Vorteil ist dabei, dass die Elektrogeräte verschiedenen Antrieben zuordenbar sind.

Bei einer vorteilhaften Ausgestaltung weist jedes der Elektrogeräte jeweils eine Watchdog-Einheit auf, welche überwacht, ob die jeweilige Logikeinheit und Rechnereinheit zyklisch wiederkehrend den Austausch der Ergebnisse ausführen oder nicht, wobei abhängig vom Ergebnis der Überwachung eine Signalspannung zum Abschalten der Schalteinheit erzeugt wird. Von Vorteil ist dabei, dass die Sicherheit erhöht wird. Denn auf diese Weise ist unabhängig überprüft, dass die beiden Einheiten ihre Locksteps ausführen.

Von Vorteil beim Verfahren ist, dass eine hohe Sicherheit in einfacher Weise erreichbar ist.

Insbesondere sind keine zusätzlichen Sicherheitsgeräte notwendig. Bei einer vorteilhaften Ausgestaltung wird der zweikanalige Steuerbefehl von einem Schalter mit zwei voneinander unabhängigen, mechanisch gekoppelten, gemeinsam betätigten Kontakten erzeugt, insbesondere wobei der erste Kanal des Steuerbefehls vom ersten der beiden Kontakte erzeugt wird und wobei der zweite Kanal des Steuerbefehls vom zweiten der beiden Kontakte erzeugt wird. Von Vorteil ist dabei, dass ein sicherheitsgerichteter Schalter verwendbar ist.

Bei einer vorteilhaften Ausgestaltung sind die erste und zweite Logikeinheit jeweils als Lockstep-Einheit ausgeführt,
wobei zyklisch wiederkehrend Ergebnisse der beiden Logikeinheiten über den Datenbus gegenseitig übermittelt und verglichen werden, wobei bei Abweichung die erste Logikeinheit die Signalspannung erzeugt und die zweite Logikeinheit einen Abschaltbefehl über den Datenbus an die erste Rechnereinheit weiterleitet, welche abhängig von diesem Abschaltbefehl eine Signalspannung, insbesondere Abschaltsignalspannung, erzeugt, welche an das erste Schaltungsteil elektrisch, insbesondere galvanisch, weitergeleitet wird. Von Vorteil ist dabei, dass eine hohe Sicherheit erreichbar ist.

Bei einer vorteilhaften Ausgestaltung sind die erste und/oder zweite Rechnereinheit jeweils als Lockstep-Einheit ausgeführt,
wobei zyklisch wiederkehrend Ergebnisse der ersten Rechnereinheit und der ersten Logikeinheit über eine Datenaustauschleitung des ersten Elektrogeräts gegenseitig übermittelt und verglichen werden, wobei bei Abweichung sowohl die erste Logikeinheit als auch die erste Rechnereinheit die Signalspannung, insbesondere Abschaltsignalspannung, erzeugt, welche an das erste Schaltungsteil elektrisch, insbesondere galvanisch, weitergeleitet wird,
und/oder wobei zyklisch wiederkehrend Ergebnisse der zweiten Rechnereinheit und der zweiten Logikeinheit über eine Datenaustauschleitung des zweiten Elektrogeräts gegenseitig übermittelt und verglichen werden, wobei bei Abweichung sowohl die zweite Logikeinheit als auch die zweite Rechnereinheit die Signalspannung, insbesondere Abschaltsignalspannung, erzeugt, welche an das zweite Schaltungsteil elektrisch, insbesondere galvanisch, weitergeleitet wird. Von Vorteil ist dabei, dass eine hohe Sicherheitskategorie erreichbar ist, obwohl nur ein kostengünstiger einkanaliger Datenbus verwendet wird.

Bei einer vorteilhaften Ausgestaltung erzeugt in jedem der Elektrogeräte jeweils eine weitere Rechnereinheit, insbesondere aufweisend einen Mikrocontroller, pulsweitenmodulierter Ansteuersignale für die Schalteinheit des jeweiligen Elektrogeräts in Abhängigkeit von Sensorsignalen eines Winkelsensors eines vom jeweiligen Elektrogerät gespeisten Elektromotors. Von Vorteil ist dabei, dass die weitere Rechnereinheit als Mikrocontroller ausführbar ist zum geregelten Betrieb des Elektromotors. Die Elektrogeräte sind dann also Umrichter, welche einen jeweiligen Elektromotor speisen. Somit ist der Elektromotor abhängig vom Winkelsensorsignal regelbar.

Weitere Vorteile ergeben sich aus den Unteransprüchen.

Die Erfindung wird nun anhand von schematischen Abbildungen näher erläutert:

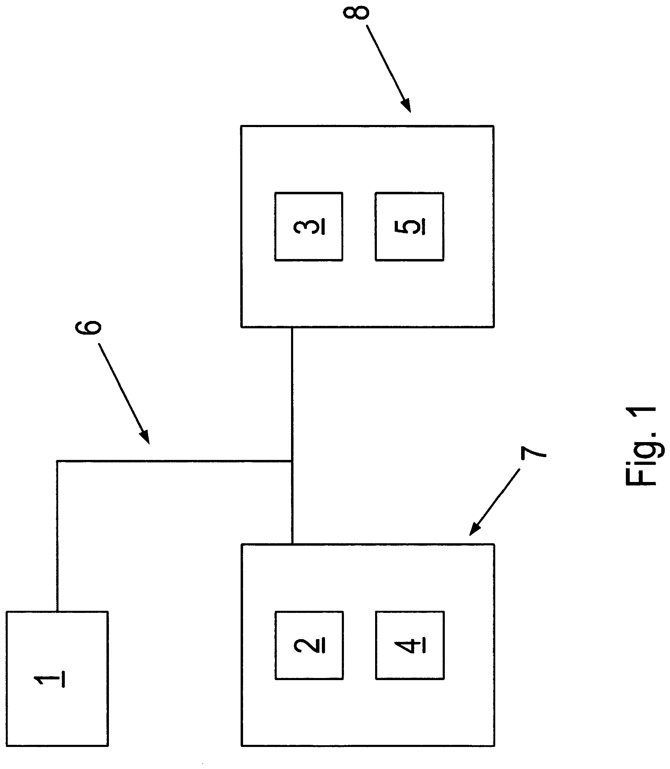

In der Figur 1 ist ein erfindungsgemäßes System mit einer Steuerung 1 und zwei mit der Steuerung 1 über einen Datenbus 6 verbundenen Elektrogeräten, insbesondere Umrichtern, dargestellt.

In der Figur 2 ist eine weitere Ausführung skizziert.

Wie in den Figuren dargestellt, weist das erste Elektrogerät 7 eine Rechnereinheit 4 auf und eine erste Logikeinheit 2. Ebenso weist das zweite Elektrogerät 8 eine Rechnereinheit 5 auf und eine zweite Logikeinheit 3.

Die Rechnereinheiten (4, 5) sind vorzugsweise als FPGA ausgeführt, insbesondere als Lockstep-FPGA. Vorteilhaft ist dabei eine Ausführung der beiden Logikeinheiten (2, 3) mit jeweiligem Mikrocontroller. Aber auch eine Ausführung jeweils als elektronische Schaltung mit Mikrocontroller oder mit FPGA, aufweisend einen Mikrocontroller, ist vorteilhaft.

Die beiden Logikeinheiten (2, 3) sind vorzugsweise als FPGA ausgeführt, insbesondere als Lockstep-FPGA. Vorteilhaft ist dabei eine Ausführung der beiden Logikeinheiten (2, 3) mit jeweiligem Mikrocontroller.

Der Datenbus 6 ist als sicherer Datenbus ausgeführt. Hierzu wird eine zweikanalige Sicherheit auf einem einkanaligen Kommunikationskanal realisiert, indem jedes Informationspaket Daten und eine Prüfsumme enthält, wobei beim Sender eine erste Logik die Daten und eine zweite Logik die Prüfsumme für ein Informationspaket des ersten Kanals generiert und umgekehrt für ein Informationspaket des zweiten Kanals gearbeitet wird.

Die Steuerung ist mit einem Not-Halt-Schalter verbunden, welcher zwei voneinander unabhängige Kontakte aufweist, so dass die Betätigung des Schalters von der Steuerung 1 über beide Kanäle des Datenbusses 6 an die Elektrogeräte (7, 8) übermittelt wird.

Die erste und zweite Logikeinheit (2, 3) sind als Busteilnehmer über den Datenbus 6 zum Informationsaustausch verbunden und vergleichen ihre jeweiligen Ergebnisse.

Das von der Steuerung über den ersten Kanal gesendete Not-Halt-Befehl wird von der ersten Logikeinheit 2 erkannt und davon abhängig ein Steuersignal erzeugt, welches ein Abschalten zumindest eines Schalters des ersten Elektrogeräts 7 bewirkt.

Das von der Steuerung über den zweiten Kanal gesendete Not-Halte-Befehl wird von der zweiten Logikeinheit 3 erkannt und dieser Befehl über den Datenbus 6 an die erste Rechnereinheit 4 weitergeleitet, die diesen Befehl erkennt und davon abhängig ein Steuersignal erzeugt, welches ein Abschalten des zumindest eines Schalters des ersten Elektrogeräts 7 bewirkt.

Dieses redundante Abschalten des Schalters des ersten Elektrogeräts 7 ist durch eine Reihenschaltung von zwei steuerbaren Halbleiterschaltern erreichbar, wobei die Reihenschaltung eine Versorgungsspannung oder eine Ansteuerspannung für den Schalter des ersten Elektrogeräts steuert und wobei der erste der beiden steuerbaren Halbleiterschalter von der ersten Logikeinheit 2 angesteuert wird und der zweite von der ersten Rechnereinheit 4.

Somit ist also das erste Elektrogerät 7 zweikanalig abschaltbar.

Das zweite Elektrogerät 8 ist ebenso zweikanalig abschaltbar ausgeführt. Vorzugsweise ist das zweite Elektrogerät 8 bezüglich der Hardware baugleich zum ersten Elektrogerät 7 ausgeführt.

Bei Ausführung der Elektrogeräte (7, 8) als Umrichter ist der jeweilige Schalter Teil eines Wechselrichters des jeweiligen Umrichters, wobei der jeweilige Wechselrichter aus einer unipolaren Spannung einem jeweiligen Elektromotor eine jeweilige Wechselspannung zur Verfügung stellt.

Dabei führt die erste Rechnereinheit 4 ein Steuer- oder Regelverfahren aus, so dass der vom ersten Umrichter 7 gespeiste Elektromotor entsprechend betrieben wird.

Dabei führt die zweite Rechnereinheit 5 ein Steuer- oder Regelverfahren aus, so dass der vom zweiten Umrichter 8 gespeiste weitere Elektromotor entsprechend betrieben wird.

Bei weiteren erfindungsgemäßen Ausführungsbeispielen werden die beiden Logikeinheiten (2, 3) als Lockstep-Einheiten ausgeführt. Hierbei wird zeitlich wiederkehrend ein jeweils aktuelles Ergebnis der ersten Logikeinheit 2 mit dem jeweils aktuellen Ergebnis der zweiten Logikeinheit 3 verglichen und bei Abweichung ebenfalls das zweikanalige Abschalten veranlasst. Zum Datenaustausch, also gegenseitigem übermitteln der jeweiligen Ergebnisse, wird der Datenbus 6 verwendet.

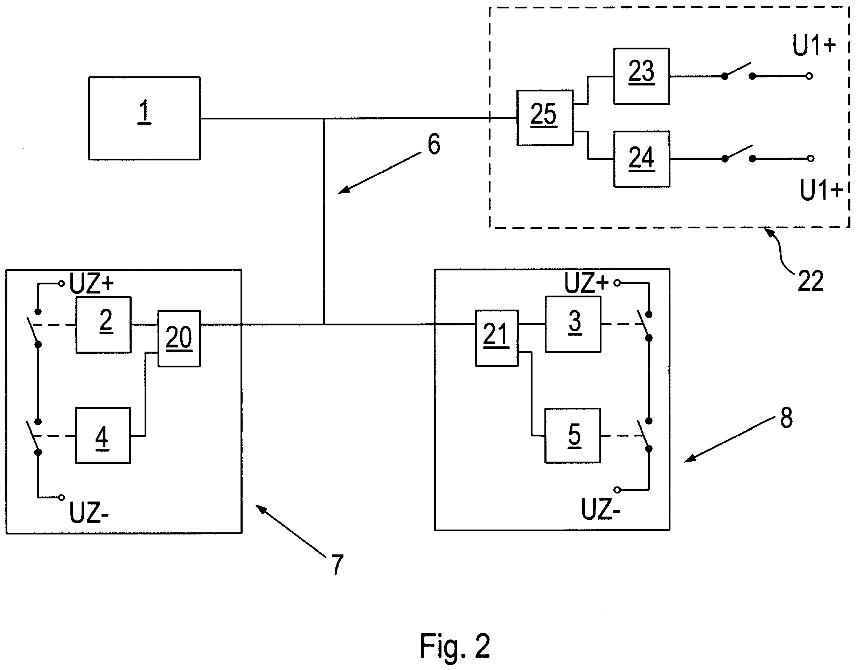

Wie in Figur 2 verdeutlicht, weist bei einem weiteren erfindungsgemäßen Ausführungsbeispiel jedes Elektrogerät nur eine einzige Busadresse auf. Die für die jeweilige Logikeinheit (2, 3) und jeweilige Rechnereinheit (4, 5) bestimmten Datenströme werden dabei von einer Busteilnehmereinheit (20, 21) des Elektrogeräts (7, 8), welche die Busadresse aufweist und mit dem Datenbus 6 verbunden ist, über einen ersten Anschluss der Busteilnehmereinheit an die jeweilige Logikeinheit (2, 3) des Elektrogeräts (7, 8) weitergeleitet und über einen zweiten Anschluss der Busteilnehmereinheit an die jeweilige Rechnereinheit (4, 5) des Elektrogeräts weitergeleitet.

Die Busadresse des ersten Elektrogeräts 7 ist also der Busteilnehmereinheit 20 zugeordnet. Der Datenstrom von oder zur ersten Logikeinheit 2 wird über einen ersten Anschluss der Busteilnehmereinheit 20 geleitet zum oder von der Logikeinheit 2. Der Datenstrom zur ersten Rechnereinheit 4 wird über einen zweiten Anschluss der Busteilnehmereinheit 20 geleitet zum oder von der Logikeinheit 2.

Im zweiten Umrichter ist die Funktionsweise genauso ausgeführt.

Von der ersten Logikeinheit 2 wird mittels einer Steuerleitung, insbesondere eine Leiterbahn der Leiterplatte, der erste, insbesondere obere, steuerbare Halbleiterschalter abschaltbar.

Von der ersten Rechnereinheit 4 ist mittels einer anderen Steuerleitung, insbesondere ebenfalls eine Leiterbahn der Leiterplatte, der zweite, insbesondere untere, steuerbare Halbleiterschalter abschaltbar.

Die aus dem ersten und zweiten steuerbaren Halbleiterschalter gebildete Reihenschaltung ist aus einer Zwischenkreisspannung versorgt, welche von einem netzgespeisten Gleichrichter bereit stellbar ist.

Somit ist ein zweikanaliges Abschalten des ersten Elektrogeräts 7 ausführbar und damit eine hohe Sicherheitskategorie erreichbar.

Von der zweiten Logikeinheit 3 wird mittels einer Steuerleitung, insbesondere eine Leiterbahn der Leiterplatte, im zweiten Elektrogerät 8 der erste, insbesondere obere, steuerbare Halbleiterschalter abschaltbar.

Von der zweiten Rechnereinheit 5 ist mittels einer anderen Steuerleitung, insbesondere ebenfalls eine Leiterbahn der Leiterplatte, der zweite, insbesondere untere, steuerbare Halbleiterschalter abschaltbar.

Die aus dem ersten und zweiten steuerbaren Halbleiterschalter des zweiten Elektrogeräts 8 gebildete Reihenschaltung ist aus einer Zwischenkreisspannung versorgt, welche von einem netzgespeisten Gleichrichter des zweiten Elektrogeräts 8 bereit stellbar ist.

Somit ist ein zweikanaliges Abschalten des zweiten Elektrogeräts 8 ausführbar und damit eine hohe Sicherheitskategorie erreichbar.

Wie in Figur 2 gezeigt ist auch der Not-Halte-Schalter 22 als Busteilnehmer ausgeführt und mit dem Datenbus 6 verbunden. Der Not-Halte-Schalter 22 weist also eine Busteilnehmereinheit 25 mit einer Busadresse auf. Der Not-Halte-Schalter 22 weist zwei elektrisch unabhängig voneinander angeordnete Kontakte auf, deren Betätigung mechanisch gekoppelt ist.

Die Betätigung des ersten, insbesondere oberen, Kontakts zur Verbindung mit einem oberen Potential U1+ einer Gleichspannung wird von einer ersten Signalelektronik 23 detektiert und weitergeleitet an die Busteilnehmereinheit 25, welche die Information über die Betätigung des ersten Kontakts über den Datenbus 6 weiterleitet, insbesondere an die erste Logikeinheit 2. Die Betätigung des zweiten, insbesondere unteren, Kontakts des Not-Halte-Schalters 22 zur Verbindung mit dem oberen Potential U1+ der Gleichspannung wird von einer zweiten Signalelektronik 24 detektiert und weitergeleitet an die Busteilnehmereinheit 25, welche die Information über die Betätigung des zweiten Kontakts über den Datenbus 6 weiterleitet, insbesondere an die zweite Logikeinheit 3, welche dann wiederum diese Information an die erste Rechnereinheit 4 weiterleitet.

Das untere Potential U1- der Gleichspannung ist in den Figuren nicht dargestellt.

In der Figur 2 ist in jedem der Elektrogeräte (7, 8) jeweils eine weitere Rechnereinheit, insbesondere aufweisend einen Mikrocontroller, vorgesehen ist zur Erzeugung pulsweitenmodulierter Ansteuersignale für die Schalteinheit des jeweiligen Elektrogeräts, wobei die weitere Rechnereinheit mit einem Winkelsensor verbunden ist, insbesondere zur Zuleitung der Sensorsignale des Winkelsensors an die weitere Rechnereinheit.

### Bezugszeichenliste

1 Steuerung
2 erste Logikeinheit
3 zweite Logikeinheit
4 Rechnereinheit
5 Rechnereinheit
6 Datenbus
7 erstes Elektrogerät
8 zweites Elektrogerät
20 Busteilnehmereinheit des ersten Elektrogeräts 7
21 Busteilnehmereinheit des zweiten Elektrogeräts 8
22 Not-Halte-Schalter
23 erste Signalelektronik
24 zweite Signalelektronik
25 Busteilnehmereinheit
UZ+ oberes Zwischenkreispotential
UZ- oberes Zwischenkreispotential
U1+ oberes Potential einer Gleichspannung
U1- unteres Potential einer Gleichspannung

## Patentansprüche

1. System mit einer über einen einkanalig ausgeführten Datenbus mit zwei als Busteilnehmern ausgeführten Elektrogeräten, als weiterer Busteilnehmer ausgeführten Steuerung,
wobei das erste Elektrogerät eine erste Logikeinheit und eine erste Rechnereinheit aufweist,
wobei das zweite Elektrogerät eine zweite Logikeinheit und eine zweite Rechnereinheit aufweist,
**wobei** ein erstes Schaltungsteil des ersten Elektrogeräts redundant sowohl von der ersten Logikeinheit als auch von der zweiten Logikeinheit abschaltbar ausgeführt ist,
wobei **in der Steuerung ein zweikanaliger Not-Halte-Schalter angeordnet ist oder wobei mit der Steuerung ein zweikanaliger Not-Halte-Schalter verbunden ist, wobei das System ein Antriebssystem und die beiden Elektrogeräte jeweils als Umrichter ausgeführt sind zur Speisung eines jeweiligen** Elektromotors,
wobei eine als Busteilnehmer ausgeführte, einen zweikanaligen Schalter aufweisende Vorrichtung eingerichtet ist, einen zweikanaligen Steuerbefehl, nämlich einen Not-Halte-Befehl, über den Datenbus an die beiden Logikeinheiten zu senden, wobei die erste Logikeinheit eingerichtet ist, abhängig vom ersten Kanal des Steuerbefehls eine Signalspannung, nämlich eine Abschaltsignalspannung, zu erzeugen, welche an das erste Schaltungsteil elektrisch weitergeleitet wird, wobei die zweite Logikeinheit eingerichtet ist, den zweiten Kanal des Steuerbefehls über den Datenbus an die erste Rechnereinheit weiterzuleiten, wobei die erste Rechnereinheit eingerichtet ist, abhängig von diesem zweiten Kanal des Steuerbefehls eine Signalspannung, nämlich eine Abschaltsignalspannung, zu erzeugen, welche an das erste Schaltungsteil elektrisch weitergeleitet wird.

2. System nach Anspruch 1,
**dadurch gekennzeichnet, dass**
ein zweites Schaltungsteil des zweiten Elektrogeräts redundant sowohl von der zweiten Logikeinheit als auch von der ersten Logikeinheit abschaltbar ausgeführt ist.

3. System nach mindestens einem der vorangegangenen Ansprüche,
**dadurch gekennzeichnet, dass**
von der ersten Logikeinheit eine erste Abschaltsignalspannung erzeugbar ist
und dass von der ersten Rechnereinheit ein von der zweiten Logikeinheit erzeugter Abschaltbefehl empfangbar und davon abhängig eine zweite Abschaltsignalspannung erzeugbar ist,
wobei beide Abschaltsignalspannungen zum ersten Schaltungsteil, über voneinander separate Leiterbahnen einer Leiterplatte des ersten Elektrogeräts geführt werden zur redundanten Abschaltung des ersten Schaltungsteils.

4. System nach mindestens einem der vorangegangenen Ansprüche,
**dadurch gekennzeichnet, dass**
von der zweiten Logikeinheit eine dritte Abschaltsignalspannung erzeugbar ist
und dass von der zweiten Rechnereinheit ein von der ersten Logikeinheit erzeugter Abschaltbefehl empfangbar und davon abhängig eine vierte Abschaltsignalspannung erzeugbar ist,
wobei die dritte und vierte Abschaltsignalspannung zum zweiten Schaltungsteil, über voneinander separate Leiterbahnen einer Leiterplatte des zweiten Elektrogeräts geführt werden zur redundanten Abschaltung des zweiten Schaltungsteils.

5. System nach mindestens einem der vorangegangenen Ansprüche,
**dadurch gekennzeichnet, dass**
die erste Logikeinheit, die zweite Logikeinheit, die erste Rechnereinheit und die zweite Rechnereinheit jeweils als Lockstep-Einheit, ausgeführt ist,
wobei Ergebnisse der ersten und zweiten Logikeinheit zyklisch wiederkehrend miteinander ausgetauscht und verglichen werden, wobei abhängig vom Ergebnis des Vergleichs, die erste Logikeinheit eine Signalspannung zum Abschalten der Schalteinheit erzeugt und die erste Rechnereinheit ebenfalls eine Signalspannung zum Abschalten der Schalteinheit erzeugt,
wobei Ergebnisse der ersten Logikeinheit und ersten Rechnereinheit zyklisch wiederkehrend miteinander ausgetauscht und verglichen werden, wobei abhängig vom Ergebnis des Vergleichs, die erste Logikeinheit eine Signalspannung zum Abschalten der Schalteinheit erzeugt und die erste Rechnereinheit ebenfalls eine Signalspannung zum Abschalten der Schalteinheit erzeugt,
wobei Ergebnisse der zweiten Logikeinheit und zweiten Rechnereinheit zyklisch wiederkehrend miteinander ausgetauscht und verglichen werden, wobei abhängig vom Ergebnis des Vergleichs, die erste Logikeinheit eine Signalspannung zum Abschalten der Schalteinheit erzeugt und die erste Rechnereinheit ebenfalls eine Signalspannung zum Abschalten der Schalteinheit erzeugt.

6. System nach mindestens einem der vorangegangenen Ansprüche,
**dadurch gekennzeichnet, dass**
die jeweilige Logikeinheit aus mehreren Subeinheiten zusammengesetzt ist, welche jeweils mittels einer jeweiligen Kommunikationsverbindung zum Datenaustausch miteinander verbunden sind.

7. System nach mindestens einem der vorangegangenen Ansprüche,
**dadurch gekennzeichnet, dass**
in jedem der Elektrogeräte jeweils eine weitere Rechnereinheit, vorgesehen ist zur Erzeugung pulsweitenmodulierter Ansteuersignale für die Schalteinheit des jeweiligen Elektrogeräts, wobei die weitere Rechnereinheit mit einem Winkelsensor verbunden ist, zur Zuleitung der Sensorsignale des Winkelsensors an die weitere Rechnereinheit.

8. System nach mindestens einem der vorangegangenen Ansprüche,
**dadurch gekennzeichnet, dass**
die erste Logikeinheit und die erste Rechnereinheit zueinander diversitär ausgeführt sind,
wobei die erste Logikeinheit eine erste Software aufweist und die erste Rechnereinheit eine von der ersten Software unterschiedliche zweite Software aufweist,
und dass
die zweite Logikeinheit und die zweite Rechnereinheit zueinander diversitär ausgeführt sind,
wobei die zweite Logikeinheit die zweite Software aufweist und die zweite Rechnereinheit die erste Software aufweist.

9. System nach mindestens einem der vorangegangenen Ansprüche,
**dadurch gekennzeichnet, dass**
erstes und zweites Elektrogerät voneinander beabstandet sind,
wobei ein Gehäuse des ersten Elektrogeräts die erste Logikeinheit und die erste Rechnereinheit gehäusebildend umgibt,
wobei ein Gehäuse des zweiten Elektrogeräts die zweite Logikeinheit und die zweite Rechnereinheit gehäusebildend umgibt.

10. System nach mindestens einem der vorangegangenen Ansprüche,
**dadurch gekennzeichnet, dass**
jedes der Elektrogeräte jeweils eine Watchdog-Einheit aufweist, welche überwacht, ob die jeweilige Logikeinheit und Rechnereinheit zyklisch wiederkehrend den Austausch der Ergebnisse ausführen oder nicht, wobei abhängig vom Ergebnis der Überwachung eine Signalspannung zum Abschalten der Schalteinheit erzeugt wird.

11. Verfahren zum Betreiben eines Systems,
wobei das System **eine** über einen einkanalig ausgeführten Datenbus, mit zwei als Busteilnehmern ausgeführten Elektrogeräten, verbundene, als weiterer Busteilnehmer ausgeführte Steuerung **aufweist,**
wobei das erste Elektrogerät eine erste Logikeinheit und eine erste Rechnereinheit aufweist, wobei das zweite Elektrogerät eine zweite Logikeinheit und eine zweite Rechnereinheit aufweist,
wobei ein erstes Schaltungsteil des ersten Elektrogeräts redundant von der ersten Logikeinheit und von der zweiten Logikeinheit abschaltbar ausgeführt ist,
wobei ein zweikanaliger Steuerbefehl, nämlich ein Not-Halte-Befehl, von einer als Busteilnehmer ausgeführten, einen zweikanaligen Schalter aufweisenden Vorrichtung, über den Datenbus an die beiden Logikeinheiten gesendet wird, wobei die erste Logikeinheit abhängig vom ersten Kanal des Steuerbefehls eine Signalspannung, nämlich eine Abschaltsignalspannung, erzeugt, welche an das erste Schaltungsteil elektrisch, weitergeleitet wird,
wobei die zweite Logikeinheit den zweiten Kanal des Steuerbefehls über den Datenbus an die erste Rechnereinheit weiterleitet, welche abhängig von diesem zweiten Kanal des Steuerbefehls eine Signalspannung, nämlich eine Abschaltsignalspannung, erzeugt, welche an das erste Schaltungsteil elektrisch, weitergeleitet wird,
**wobei das System ein Antriebssystem und die beiden Elektrogeräte jeweils als Umrichter ausgeführt sind zur Speisung eines jeweiligen Elektromotors.**

12. Verfahren nach Anspruch 11,
**dadurch gekennzeichnet, dass**
der zweikanalige Steuerbefehl von dem zweikanaligen Schalter mit zwei voneinander unabhängigen, mechanisch gekoppelten, gemeinsam betätigten Kontakten erzeugt wird,
wobei der erste Kanal des Steuerbefehls vom ersten der beiden Kontakte erzeugt wird und wobei der zweite Kanal des Steuerbefehls vom zweiten der beiden Kontakte erzeugt wird.

13. Verfahren nach mindestens einem der Ansprüche 11 und 12,
**dadurch gekennzeichnet, dass**
die erste und zweite Logikeinheit jeweils als Lockstep-Einheit ausgeführt sind,
wobei zyklisch wiederkehrend Ergebnisse der beiden Logikeinheiten über den Datenbus gegenseitig übermittelt und verglichen werden, wobei bei Abweichung die erste Logikeinheit die Signalspannung erzeugt und die zweite Logikeinheit einen Abschaltbefehl über den Datenbus an die erste Rechnereinheit weiterleitet, welche abhängig von diesem Abschaltbefehl eine Signalspannung, **also** Abschaltsignalspannung, erzeugt, welche an das erste Schaltungsteil elektrisch, weitergeleitet wird.

14. Verfahren nach mindestens einem der Ansprüche 11-13,
**dadurch gekennzeichnet, dass**
die erste und/oder zweite Rechnereinheit jeweils als Lockstep-Einheit ausgeführt sind,
wobei zyklisch wiederkehrend Ergebnisse der ersten Rechnereinheit und der ersten Logikeinheit über eine Datenaustauschleitung des ersten Elektrogeräts gegenseitig übermittelt und verglichen werden, wobei bei Abweichung sowohl die erste Logikeinheit als auch die erste Rechnereinheit die Signalspannung, **also** Abschaltsignalspannung, erzeugt, welche an das erste Schaltungsteil elektrisch, weitergeleitet wird, und/oder wobei zyklisch wiederkehrend Ergebnisse der zweiten Rechnereinheit und der zweiten Logikeinheit über eine Datenaustauschleitung des zweiten Elektrogeräts gegenseitig übermittelt und verglichen werden, wobei bei Abweichung sowohl die zweite Logikeinheit als auch die zweite Rechnereinheit die Signalspannung, **also** Abschaltsignalspannung, erzeugt, welche an das zweite Schaltungsteil elektrisch, weitergeleitet wird.

15. Verfahren nach mindestens einem der Ansprüche 11-14,
**dadurch gekennzeichnet, dass**
in jedem der Elektrogeräte jeweils eine weitere Rechnereinheit, pulsweitenmodulierter Ansteuersignale für die Schalteinheit des jeweiligen Elektrogeräts erzeugt in Abhängigkeit von Sensorsignalen eines Winkelsensors eines vom jeweiligen Elektrogerät gespeisten Elektromotors.

## Claims

1. System comprising a controller connected via a single-channel data bus to two electrical devices designed as bus subscribers, the controller being designed as a further bus subscriber,
wherein the first electrical device has a first logic unit and a first computer unit,
wherein the second electrical device has a second logic unit and a second computer unit,
wherein a first circuit part of the first electrical device is designed in such a way as to be able to be redundantly switched off both by the first logic unit and by the second logic unit,
wherein a two-channel emergency stop switch is arranged in the controller, or wherein a two-channel emergency stop switch is connected to the controller,
wherein the system is a drive system and the two electrical devices are each designed as converters for powering a respective electric motor,
wherein a device designed as a bus subscriber and having a two-channel switch is configured to transmit a two-channel control command, namely an emergency stop command, via the data bus to the two logic units, wherein the first logic unit is configured to generate, as a function of the first channel of the control command, a signal voltage, namely a switch-off signal voltage, which is electrically forwarded to the first circuit part, wherein the second logic unit is configured to forward the second channel of the control command via the data bus to the first computer unit, wherein the first computer unit is configured to generate, as a function of this second channel of the control command, a signal voltage, namely a switch-off signal voltage, which is electrically forwarded to the first circuit part.

2. System according to claim 1,
**characterized in that**
a second circuit part of the second electrical device is designed in such a way as to be able to be redundantly switched off both by the second logic unit and by the first logic unit.

3. System according to at least one of the preceding claims,
**characterized in that**
a first switch-off signal voltage can be generated by the first logic unit,
and **in that** a switch-off command generated by the second logic unit can be received by the first computer unit, and a second switch-off signal voltage can be generated as a function thereof,
wherein the two switch-off signal voltages are routed to the first circuit part via separate conductor tracks of a printed circuit board of the first electrical device in order to redundantly switch off the first circuit part.

4. System according to at least one of the preceding claims,
**characterized in that**
a third switch-off signal voltage can be generated by the second logic unit,
and **in that** a switch-off command generated by the first logic unit can be received by the second computer unit, and a fourth switch-off signal voltage can be generated as a function thereof,
wherein the third and the fourth switch-off signal voltage are routed to the second circuit part via separate conductor tracks of a printed circuit board of the second electrical device in order to redundantly switch off the second circuit part.

5. System according to at least one of the preceding claims,
**characterized in that**
the first logic unit, the second logic unit, the first computer unit and the second computer unit are each designed as a lockstep unit,
wherein results of the first and second logic unit are exchanged with each other in a cyclically recurring manner and are compared, wherein, as a function of the result of the comparison, the first logic unit generates a signal voltage for switching off the switching unit and the first computer unit likewise generates a signal voltage for switching off the switching unit,
wherein results of the first logic unit and first computer unit are exchanged with each other in a cyclically recurring manner and are compared, wherein, as a function of the result of the comparison, the first logic unit generates a signal voltage for switching off the switching unit and the first computer unit likewise generates a signal voltage for switching off the switching unit,
wherein results of the second logic unit and second computer unit are exchanged with each other in a cyclically recurring manner and are compared, wherein, as a function of the result of the comparison, the first logic unit generates a signal voltage for switching off the switching unit and the first computer unit likewise generates a signal voltage for switching off the switching unit.

6. System according to at least one of the preceding claims,
**characterized in that**
the respective logic unit is composed of a plurality of subunits, which are connected to each other in each case by means of a respective communication link for exchanging data.

7. System according to at least one of the preceding claims,
**characterized in that**,
in each of the electrical devices, a further computer unit is provided for generating pulse-width-modulated actuation signals for the switching unit of the respective electrical device, wherein the further computer unit is connected to an angle sensor in order to feed the sensor signals of the angle sensor to the further computer unit.

8. System according to at least one of the preceding claims, **characterized in that**
the first logic unit and the first computer unit are designed with diversity in relation to each other,
wherein the first logic unit has first software and the first computer unit has second software different from the first software,
and **in that**
the second logic unit and the second computer unit are designed with diversity in relation to each other,
wherein the second logic unit has the second software and the second computer unit has the first software.

9. System according to at least one of the preceding claims,
**characterized in that**
the first and the second electrical device are spaced apart from each other,
wherein a housing of the first electrical device encloses the first logic unit and the first computer unit in such a way as to form a housing,
wherein a housing of the second electrical device encloses the second logic unit and the second computer unit in such a way as to form a housing.

10. System according to at least one of the preceding claims,
**characterized in that**
each of the electrical devices has a watchdog unit which monitors whether the respective logic unit and computer unit are or are not exchanging the results in a cyclically recurring manner, wherein a signal voltage for switching off the switching unit is generated as a function of the result of the monitoring.

11. Method for operating a system,
wherein the system comprises a controller connected via a single-channel data bus to two electrical devices designed as bus subscribers, the controller being designed as a further bus subscriber,
wherein the first electrical device has a first logic unit and a first computer unit,
wherein the second electrical device has a second logic unit and a second computer unit,
wherein a first circuit part of the first electrical device is designed in such a way as to be able to be redundantly switched off by the first logic unit and by the second logic unit,
wherein a two-channel control command, namely an emergency stop command, is transmitted from a device designed as a bus subscriber and having a two-channel switch, via the data bus, to the two logic units,
wherein the first logic unit generates, as a function of the first channel of the control command, a signal voltage, namely a switch-off signal voltage, which is electrically forwarded to the first circuit part,
wherein the second logic unit forwards the second channel of the control command via the data bus to the first computer unit, which generates, as a function of this second channel of the control command, a signal voltage, namely a switch-off signal voltage, which is electrically forwarded to the first circuit part,
wherein the system is a drive system and the two electrical devices are each designed as converters for powering a respective electric motor.

12. Method according to claim 11,
**characterized in that**
the two-channel control command is generated by the two-channel switch with two mutually independent, mechanically coupled, jointly actuated contacts,
wherein the first channel of the control command is generated by the first of the two contacts, and wherein the second channel of the control command is generated by the second of the two contacts.

13. Method according to at least one of claims 11 and 12,
**characterized in that**
the first and the second logic unit are each designed as a lockstep unit,
wherein results of the two logic units are reciprocally transmitted via the data bus in a cyclically recurring manner and are compared, wherein, in the event of a discrepancy, the first logic unit generates the signal voltage and the second logic unit forwards a switch-off command via the data bus to the first computer unit, the latter generating, as a function of this switch-off command, a signal voltage, i.e. a switch-off signal voltage, which is electrically forwarded to the first circuit part.

14. Method according to at least one of claims 11 to 13,
**characterized in that**
the first and/or second computer unit are each designed as a lockstep unit,
wherein results of the first computer unit and of the first logic unit are reciprocally transmitted via a data exchange line of the first electrical device in a cyclically recurring manner and are compared, wherein, in the event of a discrepancy, both the first logic unit and the first computer unit generates the signal voltage, i.e. the switch-off signal voltage, which is electrically forwarded to the first circuit part,
and/or wherein results of the second computer unit and of the second logic unit are reciprocally transmitted via a data exchange line of the second electrical device in a cyclically recurring manner and are compared, wherein, in the event of a discrepancy, both the second logic unit and the second computer unit generates the signal voltage, i.e. the switch-off signal voltage, which is electrically forwarded to the second circuit part.

15. Method according to at least one of claims 11 to 14, **characterized in that**,
in each of the electrical devices, a further computer unit generates pulse-width-modulated actuation signals for the switching unit of the respective electrical device as a function of sensor signals of an angle sensor of an electric motor powered by the respective electrical device.

## Revendications

1. Système muni d'une commande conçue en tant qu'utilisateur de bus additionnel et connectée, par l'intermédiaire d'un bus de données de réalisation à canal unique, à deux appareils électriques conçus comme des utilisateurs de bus,
le premier appareil électrique incluant une première unité logique et une première unité de calcul,
le second appareil électrique comprenant une seconde unité logique et une seconde unité de calcul,
une première partie de circuit dudit premier appareil électrique étant conçue pour pouvoir être déconnectée, en mode redondant, aussi bien d'avec la première unité logique que d'avec la seconde unité logique,
sachant
qu'un interrupteur d'arrêt d'urgence à deux canaux est intégré dans la commande, ou sachant qu'un interrupteur d'arrêt d'urgence à deux canaux est connecté à ladite commande,
ledit système étant un système d'entraînement et les deux appareils électriques étant conçus, à chaque fois, comme des convertisseurs en vue d'alimenter un moteur électrique respectif,
sachant qu'un dispositif réalisé en tant qu'utilisateur de bus, doté d'un interrupteur à deux canaux, est agencé pour émettre à l'adresse des deux unités logiques, par l'intermédiaire du bus de données, une instruction de commande à canal double se présentant, plus précisément, comme une instruction d'arrêt d'urgence, la première unité logique étant agencée pour engendrer, avec subordination au premier canal de l'instruction de commande, une tension de signal se présentant, plus précisément, comme une tension de signal de déconnexion qui est transmise électriquement à la première partie de circuit, la seconde unité logique étant agencée pour transmettre le second canal de ladite instruction de commande à la première unité de calcul, par l'intermédiaire dudit bus de données, laquelle première unité de calcul est agencée pour engendrer, avec subordination à ce second canal de ladite instruction de commande, une tension de signal se présentant, plus précisément, comme une tension de signal de déconnexion qui est transmise électriquement à ladite première partie de circuit.

2. Système selon la revendication 1,
**caractérisé par le fait**
**qu'**une seconde partie de circuit du second appareil électrique est conçue pour pouvoir être déconnectée, en mode redondant, aussi bien d'avec la seconde unité logique que d'avec la première unité logique.

3. Système selon au moins l'une des revendications précédentes,
**caractérisé par le fait**
**qu'**une première tension de signal de déconnexion peut être engendrée par la première unité logique ;
et par le fait qu'une instruction de déconnexion engendrée par la seconde unité logique peut être reçue par la première unité de calcul, et une deuxième tension de signal de déconnexion peut être engendrée de manière conséquemment tributaire,
sachant que les deux tensions de signaux de déconnexion sont aiguillées vers la première partie de circuit par l'intermédiaire de pistes conductrices, mutuellement distinctes, d'une plaquette à circuits imprimés du premier appareil électrique, en vue de la déconnexion redondante de ladite première partie de circuit.

4. Système selon au moins l'une des revendications précédentes,
**caractérisé par le fait**
**qu'**une troisième tension de signal de déconnexion peut être engendrée par la seconde unité logique ;
et par le fait qu'une instruction de déconnexion engendrée par la première unité logique peut être reçue par la seconde unité de calcul, et une quatrième tension de signal de déconnexion peut être engendrée de manière conséquemment tributaire,
sachant que les troisième et quatrième tensions de signaux de déconnexion sont aiguillées vers la seconde partie de circuit par l'intermédiaire de pistes conductrices, mutuellement distinctes, d'une plaquette à circuits imprimés du second appareil électrique, en vue de la déconnexion redondante de ladite seconde partie de circuit.

5. Système selon au moins l'une des revendications précédentes,
**caractérisé par le fait que**
la première unité logique, la seconde unité logique, la première unité de calcul et la seconde unité de calcul sont réalisées, respectivement, sous la forme d'une unité à pas synchrones,
sachant que des résultats des première et seconde unités logiques sont mutuellement échangés et comparés avec réitération cyclique et, en fonction du résultat de la comparaison, la première unité logique engendre une tension de signal en vue de la déconnexion de l'unité de commutation, et la première unité de calcul engendre pareillement une tension de signal en vue de la déconnexion de ladite unité de commutation,
sachant que des résultats de la première unité logique et de la première unité de calcul sont mutuellement échangés et comparés avec réitération cyclique et, en fonction du résultat de la comparaison, ladite première unité logique engendre une tension de signal en vue de la déconnexion de l'unité de commutation, et ladite première unité de calcul engendre pareillement une tension de signal en vue de la déconnexion de ladite unité de commutation,
sachant que des résultats de la seconde unité logique et de la seconde unité de calcul sont mutuellement échangés et comparés avec réitération cyclique et, en fonction du résultat de la comparaison, la première unité logique engendre une tension de signal en vue de la déconnexion de l'unité de commutation, et la première unité de calcul engendre pareillement une tension de signal en vue de la déconnexion de ladite unité de commutation.

6. Système selon au moins l'une des revendications précédentes,
**caractérisé par le fait que**
l'unité logique considérée est composée de plusieurs sous-unités qui sont raccordées à chaque fois les unes aux autres, au moyen d'une connexion de communication respective, en vue de l'échange de données.

7. Système selon au moins l'une des revendications précédentes,
**caractérisé par le fait**
**qu'**une unité de calcul additionnelle est prévue à chaque fois, dans chacun des appareils électriques, afin d'engendrer des signaux de pilotage à modulation de largeurs d'impulsions, destinés à l'unité de commutation de l'appareil électrique respectif, laquelle unité de calcul additionnelle est connectée à un capteur angulaire en vue de délivrer les signaux de détection dudit capteur angulaire à ladite unité de calcul additionnelle.

8. Système selon au moins l'une des revendications précédentes,
**caractérisé par le fait que**
la première unité logique et la première unité de calcul sont conçues pour être mutuellement diversifiées,
sachant que ladite première unité logique est munie d'un premier logiciel, et que ladite première unité de calcul est pourvue d'un second logiciel différant dudit premier logiciel ; et **par le fait que**
la seconde unité logique et la seconde unité de calcul sont conçues pour être mutuellement diversifiées,
sachant que ladite seconde unité logique est dotée dudit second logiciel, et que ladite seconde unité de calcul est nantie dudit premier logiciel.

9. Système selon au moins l'une des revendications précédentes,
**caractérisé par le fait que**
les premier et second appareils électriques sont situés à distance l'un de l'autre,
un carter dudit premier appareil électrique entourant la première unité logique et la première unité de calcul, avec formation d'un boîtier,
un carter dudit second appareil électrique entourant la seconde unité logique et la seconde unité de calcul, avec formation d'un boîtier.

10. Système selon au moins l'une des revendications précédentes,
**caractérisé par le fait que**
chacun des appareils électriques est équipé, à chaque fois, d'une unité chien de garde qui surveille si l'unité logique et l'unité de calcul respectives effectuent, ou non, l'échange des résultats avec réitération cyclique, une tension de signal étant engendrée, en fonction du résultat de la surveillance, en vue de la déconnexion de l'unité de commutation.

11. Procédé d'exploitation d'un système,
lequel système est muni d'une commande conçue en tant qu'utilisateur de bus additionnel et connectée, par l'intermédiaire d'un bus de données de réalisation à canal unique, à deux appareils électriques conçus comme des utilisateurs de bus,
le premier appareil électrique incluant une première unité logique et une première unité de calcul,
le second appareil électrique comprenant une seconde unité logique et une seconde unité de calcul,
une première partie de circuit dudit premier appareil électrique étant conçue pour pouvoir être déconnectée, en mode redondant, d'avec la première unité logique et d'avec la seconde unité logique,
sachant
qu'une instruction de commande à canal double, se présentant plus précisément comme une instruction d'arrêt d'urgence, est émise à l'adresse des deux unités logiques, par l'intermédiaire du bus de données, au moyen d'un dispositif doté d'un interrupteur à deux canaux et réalisé en tant qu'utilisateur de bus,
la première unité logique engendrant, avec subordination au premier canal de l'instruction de commande, une tension de signal se présentant, plus précisément, comme une tension de signal de déconnexion qui est transmise électriquement à la première partie de circuit, la seconde unité logique transmettant, par l'intermédiaire dudit bus de données, le second canal de ladite instruction de commande à la première unité de calcul qui engendre, avec subordination à ce second canal de ladite instruction de commande, une tension de signal se présentant, plus précisément, comme une tension de signal de déconnexion qui est transmise électriquement à ladite première partie de circuit,
sachant que ledit système est un système d'entraînement et que les deux appareils électriques sont conçus à chaque fois comme des convertisseurs, en vue de l'alimentation d'un moteur électrique respectif.

12. Procédé selon la revendication 11,
**caractérisé par le fait que**
l'instruction de commande à canal double est engendrée par l'interrupteur à deux canaux, pourvu de deux contacts actionnés en commun, indépendants l'un de l'autre et couplés mécaniquement,
le premier canal de l'instruction de commande étant engendré par le premier contact, au sein des deux contacts, et le second canal de ladite instruction de commande étant engendré par le second contact, au sein desdits deux contacts.

13. Procédé selon au moins l'une des revendications 11 et 12,
**caractérisé par le fait que**
les première et seconde unités logiques sont respectivement réalisées sous la forme d'une unité à pas synchrones,
sachant que, par l'intermédiaire du bus de données, des résultats des deux unités logiques sont transmis les uns aux autres et comparés mutuellement avec réitération cyclique et sachant que, en cas d'écart, ladite première unité logique engendre la tension de signal et ladite seconde unité logique transmet une instruction de déconnexion, par l'intermédiaire dudit bus de données, à la première unité de calcul qui engendre, avec subordination à cette instruction de déconnexion, une tension de signal, c'est-à-dire une tension de signal de déconnexion transmise électriquement à la première partie de circuit.

14. Procédé selon au moins l'une des revendications 11-13,
**caractérisé par le fait que**
la (les) première et/ou seconde unité(s) de calcul est (sont) respectivement réalisée(s) sous la forme d'une unité à pas synchrones,
sachant que des résultats de la première unité de calcul et de la première unité logique sont transmis les uns aux autres et comparés mutuellement, avec réitération cyclique, par l'intermédiaire d'une ligne d'échange de données du premier appareil électrique et sachant que, en cas d'écart, tant ladite première unité logique que ladite première unité de calcul engendrent la tension de signal, c'est-à-dire la tension de signal de déconnexion transmise électriquement à la première partie de circuit,
et/ou sachant que des résultats de la seconde unité de calcul et de la seconde unité logique sont transmis les uns aux autres et comparés mutuellement, avec réitération cyclique, par l'intermédiaire d'une ligne d'échange de données du second appareil électrique et sachant que, en cas d'écart, tant ladite seconde unité logique que ladite seconde unité de calcul engendrent la tension de signal, c'est-à-dire la tension de signal de déconnexion transmise électriquement à la seconde partie de circuit.

15. Procédé selon au moins l'une des revendications 11-14,
**caractérisé par le fait que**,
dans chacun des appareils électriques, une unité de calcul additionnelle engendre, à chaque fois, des signaux de pilotage à modulation de largeurs d'impulsions, destinés à l'unité de commutation de l'appareil électrique respectif, en fonction de signaux de détection d'un capteur angulaire d'un moteur électrique alimenté par ledit appareil électrique respectif.
